# EUROPEAN PATENT APPLICATION

(11) **EP 4 761 425 A1**
(43) Date of publication of application: **17.06.2026**
(21) Application number: 23947973.6
(22) Date of filing: 08.08.2023
(51) Int. Cl.: H04W 72/23

(54) **INFORMATION INDICATION METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Dehns Germany Partnerschaft mbB
(86) International application number: PCT/CN2023/111841
(87) International publication number: WO 2025/030395

(57) **Abstract**

Embodiments of the present disclosure provide an information indication method, a terminal, a network device, a communication system, and a storage medium. The method is executed by a terminal. The method comprises: receiving first information, wherein the first information indicates first configuration information corresponding to at least one first candidate primary secondary cell (PSCell), and each first candidate PSCell corresponds to one piece of first configuration information; each piece of first configuration information corresponds to at least one execution condition; and the execution condition comprises at least one of the following: a first-type execution condition for accessing the first candidate PSCell; and a second-type execution condition for evaluating a conditional secondary cell addition or change CPAC when the first candidate PSCell becomes a serving cell. In this way, the technical solution provided by the embodiments of the present disclosure specifies a communication mechanism in which the CPAC is introduced.

## Description

### TECHNICAL FIELD

The present disclosure relates to the field of communication technology, and specifically to an information indication method, a terminal, a network device, a communication system and a storage medium.

### BACKGROUND

In the field of communication technology, a conditional primary secondary cell addition or change (CPAC) is introduced, for example, subsequent CAPC. Subsequent CPC means that a current serving cell is a candidate target cell supporting the subsequent CPAC. When this cell becomes the serving cell, a UE will continue to evaluate execution conditions corresponding to other candidate cells, thereby triggering the subsequent CPC.

### SUMMARY

After introduction of a conditional primary secondary cell addition or change (CPAC), how to implement a corresponding mechanism is a question to be considered.

Embodiments of the present disclosure provide an information indication method, a terminal, a network device, a communication system, and a storage medium.

According to a first aspect of embodiments of the present disclosure, an information indication method is provided. The method is performed by a terminal and includes:
receiving first information;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

According to a second aspect of embodiments of the present disclosure, an information indication method is provided. The method is performed by a network device and includes:
sending first information;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

According to a third aspect of embodiments of the present disclosure, an information indication method is provided. The method is performed by a communication system and includes:
sending, by a network device, first information to a terminal;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

According to a fourth aspect of embodiments of the present disclosure, a terminal is provided, including:
a transceiver module, configured to:
receive first information;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

According to a fifth aspect of embodiments of the present disclosure, a network device is provided, including:
a transceiver module, configured to:
receive first information;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

According to a sixth aspect of embodiments of the present disclosure, a communication system is provided, including: a terminal and a network device. The terminal is configured to perform the information indication method provided in the first aspect, and the network device is configured to perform the information indication method provided in the second aspect.

According to a seventh aspect of the embodiments of the present disclosure, a terminal is provided, including:
one or more processors;
in which the terminal is configured to the information indication method provided in the first aspect.

According to an eighth aspect of the embodiments of the present disclosure, a network device is provided, including:
one or more processors;
in which the network device is configured to perform the information indication method provided in the second aspect.

According to a ninth aspect of the embodiments of the present disclosure, a storage medium is provided. The storage medium stores instructions. When the instructions are executed on a communication device, the communication device is caused to perform the information indication method described in the first aspect, the second aspect or the third aspect.

The technical solution provided by the embodiments of the present disclosure clarifies a communication mechanism after introduction of the CPAC.

It should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure and, together with the description, serve to explain the principles of the embodiments of the present disclosure.
FIG. 1a is a schematic diagram of a communication system according to an embodiment of the present disclosure.
FIG. 1b is a schematic diagram of a network architecture according to an embodiment of the present disclosure.
FIG. 1c is a schematic diagram of a network architecture according to an embodiment of the present disclosure.
FIG. 1d is a schematic diagram of a network architecture according to an embodiment of the present disclosure.
FIG. 2a is a flowchart of an information indication method according to an embodiment of the present disclosure.
FIG. 2b is a flowchart of an information indication method according to an embodiment of the present disclosure.
FIG. 2c is a flowchart of an information indication method according to an embodiment of the present disclosure.
FIG. 3a is a flowchart of an information indication method according to an embodiment of the present disclosure.
FIG. 3b is a flowchart of an information indication method according to an embodiment of the present disclosure.
FIG. 4a is a flowchart of an information indication method according to an embodiment of the present disclosure.
FIG. 4b is a flowchart of an information indication method according to an embodiment of the present disclosure.
FIG. 5a is a flowchart of an information indication method according to an embodiment of the present disclosure.
FIG. 6a is a flowchart of an information indication method according to an embodiment of the present disclosure.
FIG. 7a is a block diagram of a network device according to an embodiment of the present disclosure.
FIG. 7b is a block diagram of a terminal according to an embodiment of the present disclosure.
FIG. 8a is a block diagram of a UE according to an embodiment of the present disclosure.
FIG. 8b is a block diagram of a communication device according to an embodiment of the present disclosure.

### DETAILED DESCRIPTION

Embodiments of the present disclosure provide an information indication method, a terminal, a network device, a communication system and a storage medium.

According to a first aspect of embodiments of the present disclosure, an information indication method is provided. The method is performed by a terminal and includes:
receiving first information;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

In the above embodiment, the first information indicates at least one of the first-type execution condition and the second-type execution condition. After receiving the first information, the terminal may access the first candidate PSCell and/or other candidate PSCells based on the first-type execution condition and/or the second-type execution condition, thereby improving an access mechanism of the PSCell and realizing reliable access to the candidate PSCell.

In combination with some embodiments of the first aspect, in some embodiments, each piece of first configuration information corresponds to one first set, and the first set includes at least one second-type execution condition.

In the above embodiment, at least one second-type execution condition may be configured in the form of a set.

In combination with some embodiments of the first aspect, in some embodiments, the at least one execution condition includes the second-type execution condition and the second-type execution condition is associated with a second candidate PSCell, the method further includes:
determining that the first candidate PSCell becomes the serving cell, and determining whether at least one second-type execution condition is satisfied; and
in a case of determining that at least one second-type execution condition is satisfied, accessing a second candidate PSCell corresponding to the at least one second-type execution condition.

In the above embodiment, after the first candidate PSCell becomes the serving cell, if the at least one second-type execution condition is satisfied, the second candidate PSCell corresponding to the second-type execution condition may be accessed in time to ensure the quality of wireless communication.

In combination with some embodiments of the first aspect, in some embodiments, the first information indicates at least one of:
a configuration identifier corresponding to a candidate PSCell;
the at least one execution condition; or
a configuration parameter corresponding to a candidate PSCell.

In combination with some embodiments of the first aspect, in some embodiments, the second-type execution condition is associated with a second candidate PSCell or a second configuration identifier; in which the second candidate PSCell is a candidate PSCell other than the first candidate PSCell that is configured by a network to support the CPAC, and the second configuration identifier is a configuration identifier other than a first configuration identifier corresponding to the first candidate PSCell.

In the above embodiment, the second-type execution condition may be associated with the second candidate PSCell or the second configuration identifier, which makes the configuration more flexible.

In combination with some embodiments of the first aspect, in some embodiments, the at least one execution condition does not include the second-type execution condition, and the method further includes:
receiving second information;
in which the second information indicates second configuration information corresponding to the at least one first candidate PSCell, and the second configuration information indicates at least one second-type execution condition corresponding to each first candidate PSCell.

In the above embodiment, the second-type execution condition may also be configured through the second information, which makes the configuration more flexible.

In combination with some embodiments of the first aspect, in some embodiments, each piece of second configuration information corresponds to one second set, and the second set includes the at least one second-type execution condition.

In the above embodiment, the at least one second-type execution condition may be configured in the form of a set.

In combination with some embodiments of the first aspect, in some embodiments, the second-type execution condition is associated with a measurement configuration parameter of a master cell group (MCG) or a measurement configuration parameter of a secondary cell group (SCG).

In the above embodiment, the second-type execution condition may be associated with the measurement configuration parameter of the MCG or the measurement configuration parameter of the SCG, so that the configuration is more flexible.

In combination with some embodiments of the first aspect, in some embodiments, the second-type execution condition is associated with the measurement configuration parameter of the SCG, and the measurement configuration parameter of the SCG includes a measurement configuration parameter corresponding to the first candidate PSCell.

In the above embodiment, it is clarified that the second-type execution condition is associated with the measurement configuration parameter of the SCG.

In combination with some embodiments of the first aspect, in some embodiments, the second-type execution condition is associated with a first measurement identifier, and the first measurement identifier indicates that the second-type execution condition is associated with a measurement configuration parameter of an MCG or a measurement configuration parameter of an SCG.

In the above embodiment, the first measurement identifier may be used to clearly indicate whether the second-type execution condition is associated with the measurement configuration parameter of the MCG or the measurement configuration parameter of the SCG.

In combination with some embodiments of the first aspect, in some embodiments, the at least one execution condition includes the first-type execution condition, and the method further includes:
determining whether the first-type execution condition is satisfied; and
in a case of determining that the first-type execution condition is satisfied, accessing the first candidate PSCell.

In the above embodiment, after the first-type execution condition is satisfied, the first candidate PSCell may be accessed in time.

In combination with some embodiments of the first aspect, in some embodiments, the method further includes:
determining to access the first candidate PSCell, and retaining or deleting the first-type execution condition.

In the above embodiment, after determining to access the first candidate PSCell, the first-type execution condition may be retained or deleted, so that the handling may be more flexible.

In combination with some embodiments of the first aspect, in some embodiments, retaining or deleting the first-type execution condition includes one of:
determining that the first-type execution condition is an execution condition generated by a master node (MN) and/or an execution condition corresponding to a measurement configuration parameter of the MN, and retaining the first-type execution condition; or
determining that the first-type execution condition is an execution condition generated by a source secondary node (SN) and/or an execution condition corresponding to a measurement configuration parameter of the source SN, and deleting the first-type execution condition.

In the above embodiment, the case of retaining or deleting the first-type execution condition in different situations is clarified.

In combination with some embodiments of the first aspect, in some embodiments, for the first-type execution condition retained, in a case where the serving PSCell is not a candidate cell for the CPAC and no new initial execution condition is configured for the CPAC, the first-type execution condition is re-enabled.

In the above embodiments, it is clarified that the first-type execution condition may be re-enabled.

In combination with some embodiments of the first aspect, in some embodiments, the method further includes at least one of:
applying the first-type execution condition retained, after performing an SCG release;
applying the first-type execution condition retained, after performing a dual connection (DC) release; or
applying the first-type execution condition retained, after determining that a preset PSCell change is performed and a current serving PSCell is not the first candidate PSCell.

In the above embodiments, different application scenarios of the retained first-type execution conditions are clarified.

In combination with some embodiments of the first aspect, in some embodiments, the method further includes:
updating the first-type execution condition or reconfiguring the first-type execution condition;
in which the first-type execution condition is used for the terminal to be enabled in a case where the serving PSCell is not configured or the serving PSCell is not the first candidate PSCell.

In the above embodiment, the first-type execution condition may be updated or reconfigured to adapt to different application scenarios.

In combination with some embodiments of the first aspect, in some embodiments, reconfiguring the first-type execution condition includes:
determining that the terminal has performed a conditional PSCell change (CPC), an accessed PSCell is not any candidate PSCell and the CPC needs to continue to be enabled, and reconfiguring the first-type execution condition.

In the above embodiment, it is clarified the situation that the accessed PSCell is not any candidate PSCell and the CPC needs to continue to be enabled and the first-type execution condition needs to be reconfigured.

In combination with some embodiments of the first aspect, in some embodiments, the method further includes:
determining to delete the first-type execution condition, and deleting a measurement configuration parameter associated with the first-type execution condition.

In the above embodiment, a processing situation of the measurement configuration parameter is clarified.

In combination with some embodiments of the first aspect, in some embodiments, the method further includes at least one of:
determining that a serving PSCell of the terminal is not the first candidate PSCell, starting a measurement corresponding to the first-type execution condition corresponding to the first candidate PSCell, and determining whether the first-type execution condition is satisfied; or
determining that a serving PSCell of the terminal is the first candidate PSCell, starting a measurement corresponding to the second-type execution condition corresponding to the first candidate PSCell, and determining whether the second-type execution condition is satisfied.

In the above embodiment, a measurement of the corresponding condition may be started according to different types of serving PSCells to determine whether the corresponding condition is met, thereby improving the wireless communication mechanism.

In combination with some embodiments of the first aspect, in some embodiments, the method further includes:
determining whether the first-type execution condition or the second-type execution condition is satisfied, and stopping an operation of determining whether the execution condition is satisfied and a candidate cell measurement operation.

In the above embodiment, after the first-type execution condition or the second-type execution condition is satisfied, the operation of determining whether the execution condition is satisfied and the corresponding candidate cell measurement operation may be stopped in time.

In combination with some embodiments of the first aspect, in some embodiments, the method further includes:
determining that the terminal successfully accesses a candidate PSCell, and starting an operation of determining whether a second-type execution condition corresponding to the candidate PSCell is satisfied and a candidate cell measurement operation.

In the above embodiment, after the terminal successfully accesses the candidate PSCell, the terminal promptly starts the operation of determining whether the second-type execution condition corresponding to the candidate PSCell is satisfied and the corresponding candidate cell measurement operation.

According to a second aspect of embodiments of the present disclosure, an information indication method is provided. The method is performed by a network device and includes:
sending first information;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

In combination with some embodiments of the second aspect, in some embodiments, each piece of first configuration information corresponds to one first set, and the first set includes at least one second-type execution condition.

In combination with some embodiments of the second aspect, in some embodiments, the first information indicates at least one of:
a configuration identifier corresponding to a candidate PSCell;;
the at least one execution condition; or
a configuration parameter corresponding to a candidate PSCell.

In combination with some embodiments of the second aspect, in some embodiments, the second-type execution condition is associated with a second candidate PSCell or a second configuration identifier; in which the second candidate PSCell is a candidate PSCell other than the first candidate PSCell that is configured by a network to support the CPAC, and the second configuration identifier is a configuration identifier other than a first configuration identifier corresponding to the first candidate PSCell.

In combination with some embodiments of the second aspect, in some embodiments, the at least one execution condition does not include the second-type execution condition, and the method further includes:
sending second information;
in which the second information indicates second configuration information corresponding to the at least one first candidate PSCell, and the second configuration information indicates at least one second-type execution condition corresponding to each first candidate PSCell.

In combination with some embodiments of the second aspect, in some embodiments, each piece of second configuration information corresponds to one second set, and the second set includes the at least one second-type execution condition.

In combination with some embodiments of the second aspect, in some embodiments, the second-type execution condition is associated with a measurement configuration parameter of a master cell group (MCG) or a measurement configuration parameter of a secondary cell group (SCG).

In combination with some embodiments of the second aspect, in some embodiments, the second-type execution condition is associated with the measurement configuration parameter of the SCG, and the measurement configuration parameter of the SCG includes a measurement configuration parameter corresponding to the first candidate PSCell.

In combination with some embodiments of the second aspect, in some embodiments, the second-type execution condition is associated with a first measurement identifier, and the first measurement identifier indicates that the second-type execution condition is associated with a measurement configuration parameter of an MCG or a measurement configuration parameter of an SCG.

According to a third aspect of embodiments of the present disclosure, an information indication method is provided. The method is performed by a communication system and includes:
sending, by a network device, first information to a terminal;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

According to a fourth aspect of embodiments of the present disclosure, a terminal is provided, including:
a transceiver module, configured to:
receive first information;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

According to a fifth aspect of embodiments of the present disclosure, a network device is provided, including:
a transceiver module, configured to:
receive first information;
in which the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition includes at least one of:
a first-type execution condition, used to access the first candidate PSCell; or
a second-type execution condition, used to perform an evaluation of a conditional PSCell addition or change (CPAC) after the first candidate PSCell becomes a serving cell.

According to a sixth aspect of embodiments of the present disclosure, an information indication system is provided, including: a terminal and a network device; in which the terminal is configured to perform the information indication method of the first aspect, the network device is configured to perform the information indication method of the second aspect.

According to a seventh aspect of embodiments of the present disclosure, a terminal is provided, including:
one or more processors;
in which the terminal is configured to perform the information indication method of the first aspect.

According to an eighth aspect of embodiments of the present disclosure, a network device is provided, including:
one or more processors;
in which the network device is configured to perform the information indication method of the second aspect.

According to a ninth aspect of embodiments of the present disclosure, a storage medium for storing instructions is provided. When the instructions are executed on a communication device, the communication device is caused to perform the information indication method described in alternative implementations of the first aspect or the second aspect.

According to a tenth aspect of the embodiments of the present disclosure, a program product is provided. When the program product is executed on a communication device, the communication device is caused to perform the method described in alternative implementations of the first aspect or the second aspect.

According to an eleventh aspect of the embodiments of the present disclosure, a computer program is provided. When the computer program is running on a computer, the computer is caused to perform the method described in alternative implementations of the first aspect or the second aspect.

According to a twelfth aspect of the embodiments of the present disclosure, a chip or chip system is provided. The chip or chip system includes a processing circuit configured to execute the method described in alternative implementations of the first aspect or the second aspect.

It can be understood that the above-mentioned terminal, the network device, the communication system, the storage medium, the program product, the computer program, and the chip or chip system are all used to execute the method proposed in the embodiments of the present disclosure. Therefore, for the beneficial effects that can be achieved, reference may be made to the beneficial effects in the corresponding method, which will not be repeated here.

The embodiments of the present disclosure propose a communication method, a UE, a network device, and a storage medium. In some embodiments, the terms such as communication method, information processing method, information transmission method, etc. can be replaced with each other, and the terms such as communication system, information processing system, etc. can be replaced with each other.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referred to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B...", "A and/or B...", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, descriptions such as "A or B...", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, the terms such as "in response to...", "in response to determining...", "in the case of...", "at the time of...", "when...", "if...", "provide that...", etc. can be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

In some embodiments, the apparatus and the device can be interpreted as physical or virtual, and their names are not limited to the names recorded in the embodiments, which may be understood as "equipment", "device", "circuit", "network element", "node", "function", "unit", "section", "system", "network", "chip", "chip system", "entity", and "subject" in some cases.

In some embodiments, the term "network" can be understood as apparatuses included in the network, such as an access network device, a core network device or the like.

In some embodiments, "access network device (AN device)" can also called "radio access network device (RAN device)", "base station (BS)", "radio base station", "fixed station", and may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like in some embodiments.

In some embodiments, "terminal" or "terminal device" can also called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

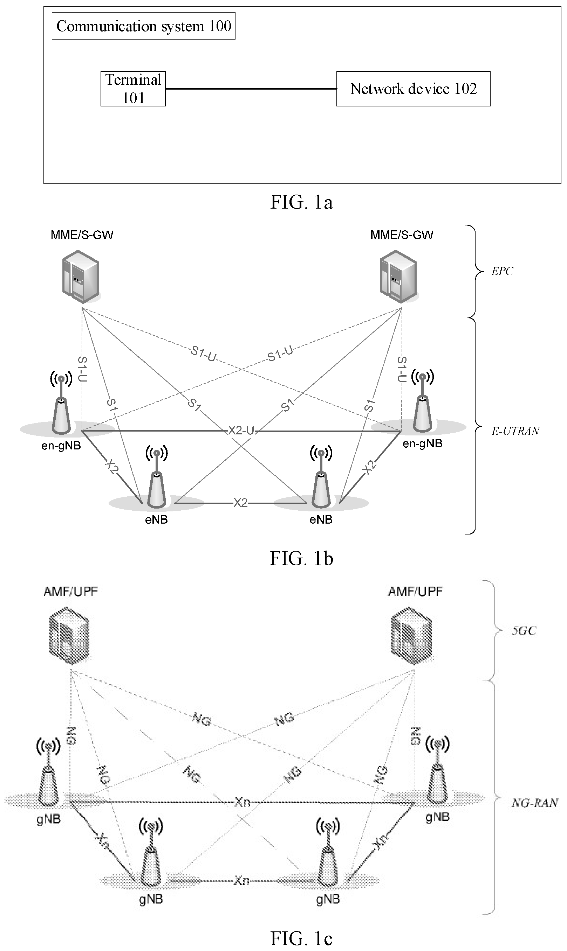

FIG. 1a is a schematic diagram of a communication system 100 according to an embodiment of the present disclosure.

As shown in FIG. 1a, the communication system 100 includes a terminal 101, and a network device 102.

In some embodiments, the network device 102 may include at least one of an access network device or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but the present disclosure is not limited thereto.

In some embodiments, an access network device may be, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but the present disclosure is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be one device, including one or more network elements, or may be a plurality of devices or a group of devices including all or part of the one or more network elements. The network element may be virtual or physical. The core network may include, for example, at least one of an Evolved Packet Core (EPC), a 5G Core Network (5GCN), or a Next Generation Core (NGC).

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the entities shown in FIG. 1a, but are not limited thereto. The entities shown in FIG. 1a are examples, and the communication system may include all or part of the entities in FIG. 1a, or may include other entities other than those shown in FIG. 1a, and the number and form of the entities are arbitrary, and the connection relationships between the entities are examples, and the entities may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In some embodiments, multi-radio dual connectivity (MR-DC) is a generalized dual connection within evolved-universal terrestrial radio access (e-utra), in which a UE may utilize radio resources provided by two different schedulers, which are located on two different next-generation radio access network (NG-RAN) nodes, connected through a non-ideal backhaul, one providing new radio (NR) access and the other providing evolved universal terrestrial radio access (E-UTRA) or NR access. One acts as a master node (MN) and the other as a secondary node (SN). The MN and the SN are connected via a network interface, in which at least the MN is connected to a core network.

In some embodiments, with reference to the EN-DC architecture of FIG. 1b, E-UTRAN supports the MR-DC through E-UTRA-NR DC (EN-DC), in which the UE is connected to an eNB acting as an MN and an en-gNB acting as an SN. The eNB is connected to the EPC through an S1 interface and to the en-gNB through an X2 interface. The en-gNB may also be connected to the evolved packet core (EPC) through an S1-U interface and to other en-gNBs through an X2-U interface.

In some embodiments, the MR-DC of the 5G core network includes one of the following:

### A) E-UTRA-NR Dual Connectivity NGEN-DC:

NG-RAN supports NG-RAN E-UTRA-NR dual connectivity (NGEN-DC), in which the UE is connected to one ng-eNB as the MN and one gNB acts as the SN. The ng-eNB is connected to the 5GC, and the gNB is connected to the ng-eNB via the Xn interface.

### B) NR-E-UTRA Dual Connectivity NE-DC:

NG-RAN supports NR-E-UTRA DC (NE-DC), in which the UE is connected to a gNB acting as the MN and an ng-eNB acting as the SN. The gNB is connected to the 5GC, and the ng-eNB is connected to the gNB via the Xn interface.

### C) NR-NR Dual Connectivity:

NG-RAN supports NR-NR DC (NR-DC), in which the UE is connected to a gNB acting as the MN and another gNB acting as the SN. The primary gNB is connected to the 5GC via an NG interface, the two gNBs are connected via the Xn interface, and the secondary gNB may also be connected to the 5GC via the NG-U interface. In addition, NR-DC may also be used for the UE to access a single gNB, acting as both the MN and the SN, and configuring an MCG and an SCG at the same time. The NR-DC architecture is shown in FIG. 1c.

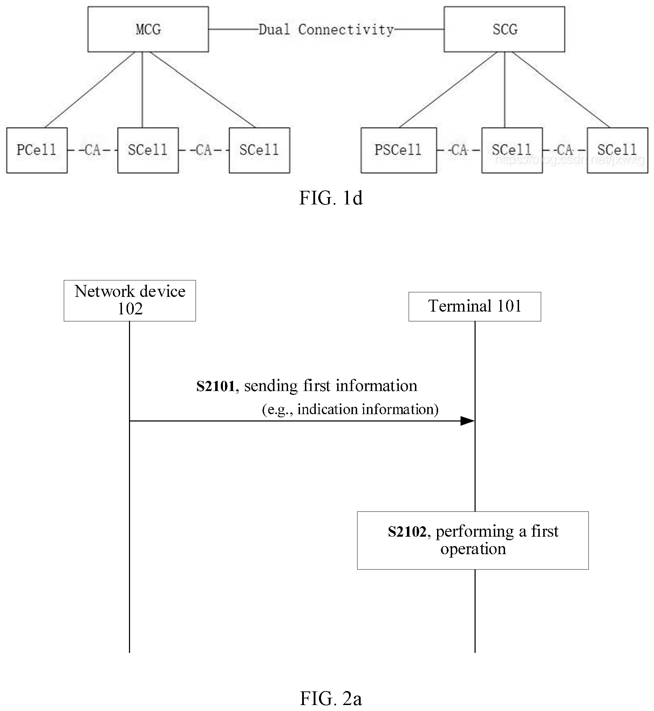

In some embodiments, under the dual connectivity, the UE may access two cell groups, namely a master cell group (MCG) and a secondary cell group (SCG). Under the MCG, there may be many cells, one of which is used to initiate initial access, and this cell is called a primary cell (Pcell). As the name implies, PCell is the most "primary" cell in the MCG. A PCell under the MCG and an SCell under the MCG are combined through carrier aggregation (CA). The primary cell in the MCG is PCell, and the secondary cell is SCell; the primary secondary cell in the SCG is called PSCell for short, and the secondary cell is SCell. Because many signalings are only sent on the PCell and the PSCell, for the convenience of description, a concept sPCell (special Cell) is also defined in the protocol. The PCell and the PSCell are collectively referred to as sPCells, with reference to FIG. 1d for details.

In some embodiments, the subsequent CPAC includes at least one of a subsequent CPC (conditional PSCell change) and a subsequent CPA (conditional PSCell addition).

In embodiments of the present disclosure, the subsequent CPAC may be referred to as subsequent CPAC, but the present disclosure is not limited thereto. In some scenarios, it may also be referred to as subsequent CPAC, following CPAC or later CPAC.

In some embodiments, a CPAC whose configuration may be continue to be (or repeatedly) used after being executed may be referred to as the subsequent CPAC.

In some embodiments, the "subsequent CPAC" in the present disclosure may continue to use the previously configured CPAC configuration to execute the CPAC after executing the CPAC once.

In some embodiments, the subsequent CPAC may be a process of performing an operation of adding or changing candidate primary secondary cells based on a preconfigured CPC or CPA configuration for the candidate primary secondary cells without reconfiguring and restarting the CPC or CPA.

In some embodiments, in a conditional PSCell change (CPC) or conditional PSCell addition (CPA), a UE configured with the CPC or CPA must release the CPC or CPA configuration when completing random access to the target PSCell. Therefore, if the network does not reconfigure and reinitialize the CPC or CPA, the terminal will not have the opportunity to continue to perform the CPC or CPA later, which may increase the latency of handover or SCG change and increase signal overhead, especially in FR2 scenarios with frequent changes of CG.

In some embodiments, the subsequent CPAC (or called cell group selective activation) is proposed. After the cell group or PSCell change or addition is triggered, the UE does not delete the conditional reconfiguration configuration (CPAC configuration). In the absence of RRC reconfiguration or reinitialization of the conditional reconfiguration configuration, the original CPAC configuration may be continue to be used for the subsequent CPAC (subsequent CPAC). Supporting the subsequent CPAC may effectively reduce signaling overhead and interruption time.

In some embodiments, a subsequent CPAC configuration includes but is not limited to at least one of the following: a configuration identifier, an execution condition, or a corresponding configuration of a candidate target cell (or cell group).

In some embodiments, the network side may simultaneously configure multiple subsequent CPAC configurations and reference configurations for the UE.

In some embodiments, the configuration identifier is an ID indicating a related configuration.

In some embodiments, the execution condition is used for triggering a mobility operation (a condition that needs to be satisfied by the UE to trigger the CPAC).

In some embodiments, the corresponding configuration of the candidate target cell (or cell group) is a candidate configuration corresponding to the target cell accessed by the UE when triggering the mobility operation, and this configuration may be represented by RRCReconfiguration.

In some embodiments, the reference configuration is a reference configuration corresponding to the candidate target configuration, the candidate target configuration is an incremental configuration of the reference configuration, and a complete configuration may be generated based on the candidate target configuration and the reference configuration. This configuration may be represented by RRCReconfiguration. The UE will apply the complete configuration when executing the CPAC. The reference configuration may be a specific configuration generated by the network, or may be the current configuration of the UE. Only the configuration for the subsequent CPAC will require the configuration of the reference configuration.

In some embodiments, the configuration of the CPAC does not include the reference configuration, but only includes a configuration identifier, an execution condition, and a corresponding configuration of a candidate target cell (or cell group). The target cell accessed by the UE when triggering a mobility operation directly applies the configuration of the candidate target cell (or cell group) or generates a configuration to be applied based on other specific configurations and the configuration of the candidate target cell (or cell group).

In some embodiments, in the subsequent CPAC, the network side may provide the terminal with "candidate cell/cell group configuration". These candidate cell/cell group configurations may be applied multiple times in the future without re-providing the cell/cell group configuration. That is, in the subsequent CPAC, after applying the new cell group configuration to access a new cell, the UE does not delete the original subsequent CPAC configuration.

In some embodiments, the UE in the CPAC may support the CPC initiated by the master node and the CPC initiated by the secondary node. A triggering condition of the CPC may be A3, A4, and/or A5.

For example, the CPC initiated by the MN may be configured with A4, and the CPC initiated by the SN may be configured with A3 and A5.

In some embodiments, condition A3 refers to that the candidate conditional reconfiguration becomes to have an offset better than the PCell/PSCell.

In some embodiments, condition A4 refers to that the candidate conditional reconfiguration becomes better than an absolute threshold.

In some embodiments, condition A5 refers to that the PCell/PSCell becomes worse than an absolute threshold 1 and the conditional reconstruction candidate becomes better than another absolute threshold 2.

In some embodiments, for the subsequent CPAC, both the MN-initiated subsequent CPAC and the SN-initiated subsequent CPAC are supported.

In some embodiments, descriptions will be made for the MN-initiated subsequent CPAC.

In some embodiments, for the MN-initiated inter-SN subsequent CPAC, a source MN generates an execution condition for the initial CPAC.

The solution of the subsequent CPAC includes the followings.

Option 1: a source MN generates execution conditions for all subsequent CPCs.

Option 2: a source SN may generate execution conditions for subsequent CPCs.

In some embodiments, descriptions will be made for the SN-initiated CPC.

For the SN-initiated inter-SN subsequent CPC, the source SN generates the execution condition for the initial CPC.

For the SN-initiated subsequent CPC, the candidate SN generates an execution condition for the subsequent CPC.

For example, the initial CPC means that the UE triggers the CPAC from the initial source PSCell to access a candidate cell that supports the subsequent CPAC. The subsequent CPC means that the current serving cell is a candidate target cell that supports the subsequent CPAC. When this cell becomes the serving cell, the UE will continue to evaluate the execution conditions corresponding to other candidate cells, thereby triggering the subsequent CPC.

In some embodiments, after receiving the subsequent CPC configuration, the UE first evaluates the initial execution condition, triggers the initial CPC, and then executes the subsequent CPC multiple times without receiving an RRC reconfiguration message from the network side. The execution condition of the subsequent CPC is generated by the candidate SN.

FIG. 2a is an interactive schematic diagram of an information indication method according to an embodiment of the present disclosure. As shown in FIG. 2a, the embodiment of the present disclosure relates to an information indication method, which is applied in a communication system 100, and the method includes the followings.

Step S2101, a network device sends first information to a terminal.

In some embodiments, the terminal receives the first information sent by the network device.

In some embodiments, the first information may be configuration information, for example, configuration information for configuring conditional reconfiguration.

In some embodiments, the first information may be information of a mobility configuration supporting the CPAC.

In some embodiments, the first information indicates first configuration information corresponding to at least one first candidate primary secondary cell (PSCell).

In some embodiments, the first information indicates first configuration information corresponding to at least one first secondary cell group (SCG).

It can be understood that the first PSCell involved in the embodiments of the present disclosure may also be replaced by the first SCG, which is not limited here and will not be elaborated later.

In some embodiments, each first candidate PSCell corresponds to one piece of first configuration information.

In some embodiments, each piece of first configuration information corresponds to at least one execution condition.

In some embodiments, the execution condition includes at least one of a first-type execution condition or second-type execution condition.

The first-type execution condition is used to access the first candidate PSCell.

For example, the first-type execution condition is an execution condition for initial access to the first candidate PSCell.

For example, the execution condition for the initial access to the first candidate PSCell is a condition that the terminal needs to evaluate when evaluating whether to access the first candidate PSCell in the serving cell where the terminal receives the first configuration information, after the first configuration information corresponding to the first candidate PSCell is configured.

For example, the execution condition for the initial access to the first candidate PSCell is an execution condition to be evaluated by the terminal when performing the CPA to access to the first candidate PSCell.

The second-type execution condition is used to perform an evaluation of the conditional PSCell change (CPC) after the first candidate PSCell becomes the serving cell.

In some embodiments, the CPAC may be a subsequent conditional PSCell addition or change (subsequent CPAC).

In some embodiments, the CPA may be a subsequent conditional PSCell addition (subsequent CPA).

For example, the subsequent CPA means the CPA that the terminal may continue to perform based on the corresponding configuration after performing SCG release or MR-DC release after expectation of the CPA to add the PSCell.

In some embodiments, the CPC may be a subsequent conditional PSCell addition or change (subsequent CPC).

For example, the subsequent CPC means the CPC that the terminal may continue to perform based on the corresponding configuration after the UE executes the CPAC.

In some embodiments, each first configuration information corresponds to one first set, and the first set includes at least one second-type execution condition.

In some embodiments, the first information indicates at least one of:
a configuration identifier corresponding to a candidate PSCell;
the execution condition; or
a configuration parameter corresponding to a candidate PSCell.

In some embodiments, each first candidate PSCell corresponds to one configuration identifier.

In some embodiments, the second-type execution condition is associated with a second candidate PSCell; in which the second candidate PSCell is a candidate PSCell other than the first candidate PSCell that is configured by a network to support the CPAC.

In some embodiments, the second-type execution condition is associated with a second configuration identifier; in which the second configuration identifier is a configuration identifier other than a first configuration identifier corresponding to the first candidate PSCell.

In some embodiments, the execution condition indicated by the first information does not include the second-type execution condition.

In some embodiments, second information is received.

In some embodiments, the second information indicates second configuration information corresponding to at least one first candidate PSCell.

In some embodiments, the second configuration information indicates at least one second-type execution condition corresponding to each first candidate PSCell.

In some embodiments, each second configuration information corresponds to one second set, and the second set includes at least one second-type execution condition.

In some embodiments, the second-type execution condition is associated with a measurement configuration parameter of a master cell group (MCG).

In some embodiments, the second-type execution condition is associated with a measurement configuration parameter of a secondary cell group (SCG).

In some embodiments, the second-type execution condition is associated with a measurement configuration parameter of the SCG, and the measurement configuration parameter of the SCG is a measurement configuration parameter corresponding to the first candidate PSCell.

In some embodiments, the second-type execution condition is associated with a first measurement identifier.

In some embodiments, the first measurement identifier indicates that the second-type execution condition is associated with the measurement configuration parameter of the MCG or the measurement configuration parameter of the SCG.

In some embodiments, the execution condition may be generated by a candidate SN.

Thus, the above embodiment provides a mechanism for configuring, for the terminal, the execution condition for the subsequent CPAC generated by the candidate SN.

Step S2102, a first operation is performed.

In some embodiments, the first operation may be an operation for performing the CPAC or an operation associated with performing the CPAC.

In some embodiments, the execution condition includes the second-type execution condition and the second-type execution condition is associated with a second candidate PSCell.

In some embodiments, it is determined that the first candidate PSCell becomes the serving cell, and it is determined whether the at least one second-type execution condition is satisfied.

In some embodiments, it is determined that at least one second-type execution condition is satisfied, and a second candidate PSCell corresponding to the second-type execution condition is accessed.

In some embodiments, the execution condition includes the first-type execution condition.

In some embodiments, it is determined whether the first-type execution condition is satisfied.

In some embodiments, it is determined that the first-type execution condition is satisfied, and the first candidate PSCell is accessed.

In some embodiments, it is determined to access the first candidate PSCell and retain or delete the first-type execution condition.

The following describes examples of processing the first-type execution condition after the terminal executes the initial CPAC through some embodiments.

In some embodiments, it is determined that the first-type execution condition is an execution condition generated by the MN and/or an execution condition corresponding to a measurement configuration parameter of the MN, and the first-type execution condition is retained.

For example, the MN may be a current serving MN.

In some embodiments, it is determined that the first-type execution condition is an execution condition generated by the source SN and/or an execution condition corresponding to a measurement configuration parameter of the source SN (or source SCG), and the first-type execution condition is deleted.

In some embodiments, for the retained first-type execution condition, if the serving PSCell is not a candidate cell for the CPAC and no new initial execution condition is configured for the CPAC, the first-type execution condition can be re-enabled.

In some embodiments, the retained first-type execution condition is applied after performing secondary cell group (SCG) release.

In some embodiments, the retained first-type execution condition is applied after performing dual connection (DC) release.

In some embodiments, the retained first-type execution condition is applied after it is determined that a preset PSCell change is performed and the current serving PSCell is not the first candidate PSCell.

In some embodiments, the first-type execution condition is updated or the first-type execution condition is reconfigured.

In some embodiments, the first-type execution condition is used to be enabled by the terminal in a case where the serving PSCell is not configured or the serving PSCell is not the first candidate PSCell.

In some embodiments, it is determined that the terminal has executed the conditional PSCell change (CPC), the accessed PSCell is not any candidate PSCell and the CPC needs to continue to be enabled, and the first-type execution condition is reconfigured.

In some embodiments, it is determined to delete the first-type execution condition, and the measurement configuration parameter associated with the first-type execution condition is deleted.

The following describes some embodiments of the evaluation of execution conditions for starting or stopping the subsequent CPAC and corresponding measurements.

In some embodiments, it is determined that the serving PSCell of the terminal is not the first candidate PSCell, and a measurement corresponding to the first-type execution condition corresponding to the first candidate PSCell is started to determine whether the first-type execution condition is satisfied. In some embodiments, it is determined that the serving PSCell of the terminal is the first candidate PSCell, and a measurement corresponding to the second-type execution condition corresponding to the first candidate PSCell is started to determine whether the second-type execution condition is satisfied.

In some embodiments, it is determined that the first-type execution condition or the second-type execution condition is satisfied, and the operation of determining whether the execution condition is satisfied and the corresponding candidate cell measurement operation are stopped.

In some embodiments, it is determined that the terminal successfully accesses the candidate PSCell, and the operation of determining whether the second-type execution condition corresponding to the candidate PSCell is satisfied and the corresponding candidate cell measurement operation are started.

In some embodiments, the term "information" may be interchangeable with terms such as "message", "signal", "signaling", "report", "configuration", "indication", "instruction", "command", "channel", "parameter", "field", "data" and the like.

In some embodiments, the term "sending" may be interchangeable with terms such as "transmitting", "reporting", "transmitting" and the like.

The information indication method involved in the embodiment of the present disclosure may include at least one of step S2101 to step S2102. For example, step S2101 may be implemented as an independent embodiment, and step S2102 may be implemented as an independent embodiment, but the present disclosure is not limited thereto.

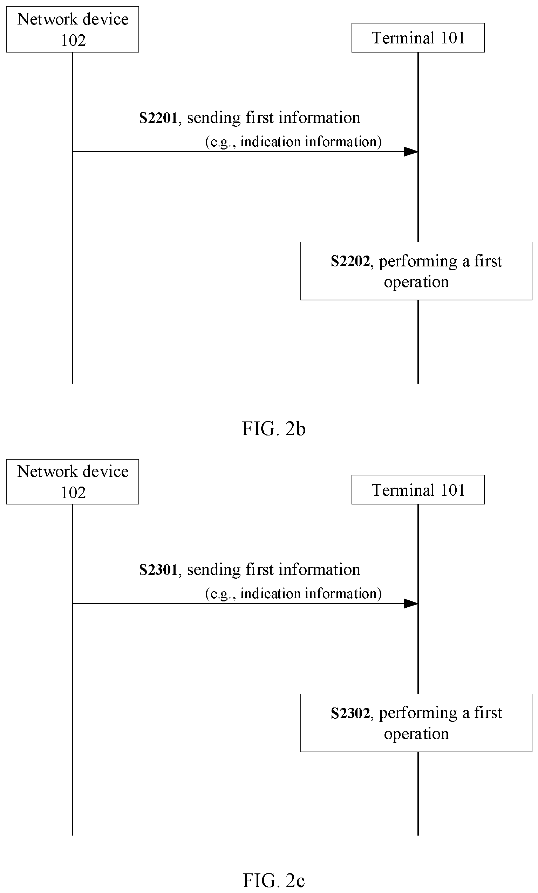

FIG. 2b is an interactive schematic diagram of an information indication method according to an embodiment of the present disclosure. As shown in FIG. 2b, the embodiment of the present disclosure relates to an information indication method, which is applied in a communication system 100, and the method includes the followings.

Step S2201, a network device sends first information to a terminal.

Regarding the optional implementation of step S2201, reference may be made to the optional implementation of step S2101 in FIG. 2a and other related parts of the embodiment involved in FIG. 2a, which will not be repeated in detail here.

Step S2202, a first operation is performed.

In some embodiments, the first operation may be a processing operation for a first-type execution condition.

In some embodiments, regarding the optional implementation of step S2202, reference may be made to the optional implementation of step S2102 in FIG. 2a and other related parts of the embodiment involved in FIG. 2a, which will not be repeated in detail here.

In some embodiments, it is determined whether the first-type execution condition is satisfied.

In some embodiments, it is determined that the first-type execution condition is satisfied, and a first candidate PSCell is accessed.

In some embodiments, it is determined to access the first candidate PSCell and retain or delete the first-type execution condition.

The following describes examples of processing the first-type execution condition after the terminal executes the initial CPAC through some embodiments.

In some embodiments, it is determined that the first-type execution condition is an execution condition generated by the MN and/or an execution condition corresponding to a measurement configuration parameter of the MN, and the first-type execution condition is retained.

For example, the MN may be a current serving MN.

In some embodiments, it is determined that the first-type execution condition is an execution condition generated by the source SN and/or an execution condition corresponding to a measurement configuration parameter of the source SN (or source SCG), and the first-type execution condition is deleted.

In some embodiments, for the retained first-type execution condition, if the serving PSCell is not a candidate cell for the CPAC and no new initial execution condition is configured for the CPAC, the first-type execution condition can be re-enabled.

In some embodiments, the retained first-type execution condition is applied after performing SCG release.

In some embodiments, the retained first-type execution condition is applied after performing DC release.

In some embodiments, the retained first-type execution condition is applied after it is determined that a preset PSCell change is performed and the current serving PSCell is not the first candidate PSCell.

In some embodiments, the first-type execution condition is updated or the first-type execution condition is reconfigured.

In some embodiments, the first-type execution condition is used to be enabled by the terminal in a case where the serving PSCell is not configured or the serving PSCell is not the first candidate PSCell.

In some embodiments, it is determined that the terminal has performed the CPC, the accessed PSCell is not any candidate PSCell and the CPC needs to continue to be enabled, and the first-type execution condition is reconfigured.

In some embodiments, it is determined to delete the first-type execution condition, and a measurement configuration parameter associated with the first-type execution condition is deleted.

The information indication method involved in the embodiment of the present disclosure may include at least one of step S2201 to step S2202. For example, step S2201 may be implemented as an independent embodiment, and step S2202 may be implemented as an independent embodiment, but the present disclosure is not limited thereto.

FIG. 2c is an interactive schematic diagram of an information indication method according to an embodiment of the present disclosure. As shown in FIG. 2c, the embodiment of the present disclosure relates to an information indication method, which is applied in a communication system 100, and the method includes the followings.

Step S2301, a network device sends first information to a terminal.

Regarding the optional implementation of step S2301, reference may be made to the optional implementation of step S2101 in FIG. 2a and other related parts of the embodiment involved in FIG. 2a, which will not be repeated in detail here.

Step S2302, a first operation is performed.

In some embodiments, the first operation may be an evaluation operation for a first-type execution condition and/or a measurement operation for a candidate cell.

In some embodiments, regarding the optional implementation of step S2302, reference may be made to the optional implementation of step S2102 in FIG. 2a and other related parts of the embodiment involved in FIG. 2a, which will not be repeated in detail here.

In some embodiments, it is determined that a serving PSCell of the terminal is not the first candidate PSCell, a measurement corresponding to the first-type execution condition corresponding to the first candidate PSCell is started, and it is determined whether the first-type execution condition is satisfied.

In some embodiments, it is determined that the serving PSCell of the terminal is the first candidate PSCell, the measurement corresponding to the second-type execution condition corresponding to the first candidate PSCell is started, and it is determined whether the second-type execution condition is satisfied.

In some embodiments, it is determined that the first-type execution condition or the second-type execution condition is satisfied, and an operation of determining whether the execution condition is satisfied and a corresponding candidate cell measurement operation are stopped.

In some embodiments, it is determined that the terminal successfully accesses the candidate PSCell, and an operation of determining whether the second-type execution condition corresponding to the candidate PSCell is satisfied and a corresponding candidate cell measurement operation are started.

The information indication method involved in the embodiment of the present disclosure may include at least one of step S2301 to step S2302. For example, step S2301 may be implemented as an independent embodiment, and step S2302 may be implemented as an independent embodiment, but the present disclosure is not limited thereto.

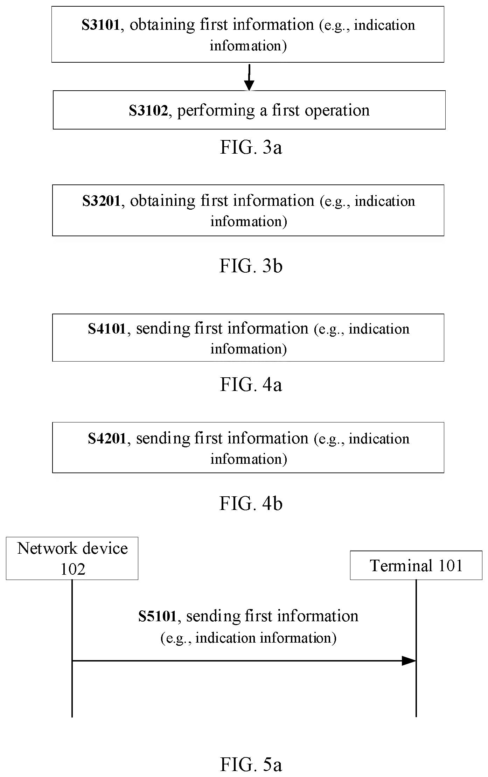

FIG. 3a is a flowchart illustrating an information indication method according to an embodiment of the present disclosure. As shown in FIG. 3a, the embodiment of the present disclosure relates to an information indication method performed by a terminal 101, and the method includes the following steps.

Step S3101, first information is obtained.

In some embodiments, regarding the optional implementation of step S3101, reference may be made to the optional implementations of step S2101 in FIG. 2a, step S2201 in FIG. 2b and step S2301 in FIG. 2c and other related parts of the embodiments involved in FIG. 2a, FIG. 2b and FIG. 2c, which will not be repeated in detail here.

In some embodiments, the terminal receives the first information sent by an access network device, but the present disclosure is not limited thereto and the terminal may also receive the first information sent by other entities.

In some embodiments, the terminal obtains the first information specified by a protocol.

In some embodiments, the terminal obtains the first information from an upper layer(s).

In some embodiments, the terminal performs processing to obtain the first information.

In some embodiments, step S3101 is omitted, the terminal autonomously implements the function indicated by the first information, or the above function is default or preset.

Step S3102, a first operation is performed.

In some embodiments, regarding the optional implementation of step S3102, reference may be made to the optional implementations of step S2102 in FIG. 2a, step S2202 in FIG. 2b and step S2302 in FIG. 2c and other related parts of the embodiments involved in FIG. 2a, FIG. 2b and FIG. 2c, which will not be repeated in detail here.

The information indication method involved in the embodiment of the present disclosure may include at least one of step S3101 to step S3102. For example, step S3101 may be implemented as an independent embodiment, and step S3102 may be implemented as an independent embodiment, but the present disclosure is not limited thereto.

FIG. 3b is a flowchart illustrating an information indication method according to an embodiment of the present disclosure. As shown in FIG. 3b, the embodiment of the present disclosure relates to an information indication method performed by a terminal 101, and the method includes the following steps.

Step S3201, first information is obtained.

In some embodiments, the first information indicates first configuration information corresponding to at least one first candidate PSCell, each first candidate PSCell corresponds to one piece of first configuration information; each piece of first configuration information corresponds to at least one execution condition; the execution condition includes at least one of:
a first-type execution condition, used to access the first candidate PSCell; or
a second-type execution condition, used to perform an evaluation of a CPAC after the first candidate PSCell becomes a serving cell.

In some embodiments, regarding the optional implementation of step S3201, reference may be made to the optional implementations of step S2101 in FIG. 2a, step S2201 in FIG. 2b and step S2301 in FIG. 2c and other related parts of the embodiments involved in FIG. 2a, FIG. 2b and FIG. 2c, which will not be repeated in detail here.

In some embodiments, each piece of first configuration information corresponds to one first set, and the first set includes at least one second-type execution condition.

In some embodiments, the execution condition includes the second-type execution condition and the second-type execution condition is associated with a second candidate PSCell, the method further includes:
determining that the first candidate PSCell becomes the serving cell, and determining whether at least one second-type execution condition is satisfied; and
in a case of determining that at least one second-type execution condition is satisfied, accessing a second candidate PSCell corresponding to the at least one second-type execution condition.

In some embodiments, the first information indicates at least one of:
a configuration identifier corresponding to a candidate PSCell;
the at least one execution condition; or
a configuration parameter corresponding to a candidate PSCell.

In some embodiments, the second-type execution condition is associated with a second candidate PSCell or a second configuration identifier; in which the second candidate PSCell is a candidate PSCell other than the first candidate PSCell that is configured by a network to support the CPAC, and the second configuration identifier is a configuration identifier other than a first configuration identifier corresponding to the first candidate PSCell.

In some embodiments, the at least one execution condition does not include the second-type execution condition, and the method further includes:
receiving second information;
in which the second information indicates second configuration information corresponding to the at least one first candidate PSCell, and the second configuration information indicates at least one second-type execution condition corresponding to each first candidate PSCell.

In some embodiments, each piece of second configuration information corresponds to one second set, and the second set includes the at least one second-type execution condition.

In some embodiments, the second-type execution condition is associated with a measurement configuration parameter of a master cell group (MCG) or a measurement configuration parameter of a secondary cell group (SCG).

In some embodiments, the second-type execution condition is associated with the measurement configuration parameter of the SCG, and the measurement configuration parameter of the SCG includes a measurement configuration parameter corresponding to the first candidate PSCell.

In some embodiments, the second-type execution condition is associated with a first measurement identifier, and the first measurement identifier indicates that the second-type execution condition is associated with a measurement configuration parameter of an MCG or a measurement configuration parameter of an SCG.

In some embodiments, the at least one execution condition includes the first-type execution condition, and the method further includes:
determining whether the first-type execution condition is satisfied; and
in a case of determining that the first-type execution condition is satisfied, accessing the first candidate PSCell.

In some embodiments, the method further includes:
determining to access the first candidate PSCell, and retaining or deleting the first-type execution condition.

In some embodiments, retaining or deleting the first-type execution condition includes one of:
determining that the first-type execution condition is an execution condition generated by a master node (MN) and/or an execution condition corresponding to a measurement configuration parameter of the MN, and retaining the first-type execution condition; or
determining that the first-type execution condition is an execution condition generated by a source secondary node (SN) and/or an execution condition corresponding to a measurement configuration parameter of the source SN, and deleting the first-type execution condition.

In some embodiments, for the first-type execution condition retained, in a case where the serving PSCell is not a candidate cell for the CPAC and no new initial execution condition is configured for the CPAC, the first-type execution condition is re-enabled.

In some embodiments, the method further includes at least one of:
applying the first-type execution condition retained, after performing an SCG release;
applying the first-type execution condition retained, after performing a dual connection (DC) release; or
applying the first-type execution condition retained, after determining that a preset PSCell change is performed and a current serving PSCell is not the first candidate PSCell.

In some embodiments, the method further includes:
updating the first-type execution condition or reconfiguring the first-type execution condition;
in which the first-type execution condition is used for the terminal to be enabled in a case where the serving PSCell is not configured or the serving PSCell is not the first candidate PSCell.

In some embodiments, reconfiguring the first-type execution condition includes:
determining that the terminal has performed a conditional PSCell change (CPC), an accessed PSCell is not any candidate PSCell and the CPC needs to continue to be enabled, and reconfiguring the first-type execution condition.

In some embodiments, the method further includes:
determining to delete the first-type execution condition, and deleting a measurement configuration parameter associated with the first-type execution condition.

In some embodiments, the method further includes at least one of:
determining that a serving PSCell of the terminal is not the first candidate PSCell, starting a measurement corresponding to the first-type execution condition corresponding to the first candidate PSCell, and determining whether the first-type execution condition is satisfied; or
determining that a serving PSCell of the terminal is the first candidate PSCell, starting a measurement corresponding to the second-type execution condition corresponding to the first candidate PSCell, and determining whether the second-type execution condition is satisfied.

In some embodiments, the method further includes:
determining whether the first-type execution condition or the second-type execution condition is satisfied, and stopping an operation of determining whether the execution condition is satisfied and a candidate cell measurement operation.

In some embodiments, the method further includes:
determining that the terminal successfully accesses a candidate PSCell, and starting an operation of determining whether a second-type execution condition corresponding to the candidate PSCell is satisfied and a candidate cell measurement operation.

FIG. 4a is a flowchart illustrating an information indication method according to an embodiment of the present disclosure. As shown in FIG. 4a, the embodiment of the present disclosure relates to an information indication method performed by a network device 102, and the method includes the following steps.

Step S4101, first information is sent.

In some embodiments, regarding the optional implementation of step S4101, reference may be made to the optional implementations of step S2101 in FIG. 2a, step S2201 in FIG. 2b and step S2301 in FIG. 2c and other related parts of the embodiments involved in FIG. 2a, FIG. 2b and FIG. 2c, which will not be repeated in detail here.

In some embodiments, the network device sends the first information to a terminal, but the present disclosure is not limited thereto and the network device may also send the first information to other entities.

FIG. 4b is a flowchart illustrating an information indication method according to an embodiment of the present disclosure. As shown in FIG. 4b, the embodiment of the present disclosure relates to an information indication method performed by a network device, and the method includes the following steps.

Step S4201, first information is sent.

In some embodiments, the first information indicates first configuration information corresponding to at least one first candidate PSCell, each first candidate PSCell corresponds to one piece of first configuration information; each piece of first configuration information corresponds to at least one execution condition; the execution condition includes at least one of:
a first-type execution condition, used to access the first candidate PSCell; or
a second-type execution condition, used to perform an evaluation of a CPAC after the first candidate PSCell becomes a serving cell.

In some embodiments, regarding the optional implementation of step S4201, reference may be made to the optional implementations of step S2101 in FIG. 2a, step S2201 in FIG. 2b and step S2301 in FIG. 2c and other related parts of the embodiments involved in FIG. 2a, FIG. 2b and FIG. 2c, which will not be repeated in detail here.

In some embodiments, each piece of first configuration information corresponds to one first set, and the first set includes at least one second-type execution condition.

In some embodiments, the first information indicates at least one of:
a configuration identifier corresponding to a candidate PSCell;
the at least one execution condition; or
a configuration parameter corresponding to a candidate PSCell.

In some embodiments, the second-type execution condition is associated with a second candidate PSCell or a second configuration identifier; in which the second candidate PSCell is a candidate PSCell other than the first candidate PSCell that is configured by a network to support the CPAC, and the second configuration identifier is a configuration identifier other than a first configuration identifier corresponding to the first candidate PSCell.

In some embodiments, the at least one execution condition does not include the second-type execution condition, and the method further includes:
sending second information;
in which the second information indicates second configuration information corresponding to the at least one first candidate PSCell, and the second configuration information indicates at least one second-type execution condition corresponding to each first candidate PSCell.

In some embodiments, each piece of second configuration information corresponds to one second set, and the second set includes the at least one second-type execution condition.

In some embodiments, the second-type execution condition is associated with a measurement configuration parameter of a master cell group (MCG) or a measurement configuration parameter of a secondary cell group (SCG).

In some embodiments, the second-type execution condition is associated with the measurement configuration parameter of the SCG, and the measurement configuration parameter of the SCG includes a measurement configuration parameter corresponding to the first candidate PSCell.

In some embodiments, the second-type execution condition is associated with a first measurement identifier, and the first measurement identifier indicates that the second-type execution condition is associated with a measurement configuration parameter of an MCG or a measurement configuration parameter of an SCG.

FIG. 5a is a flowchart illustrating an information indication method according to an embodiment of the present disclosure. As shown in FIG. 5a, the embodiment of the present disclosure relates to an information indication method performed by a communication system 100, and the method includes the following steps.

Step S5101, a network device sends first information to a terminal.

In some embodiments, the first information indicates first configuration information corresponding to at least one first candidate PSCell, each first candidate PSCell corresponds to one piece of first configuration information; each piece of first configuration information corresponds to at least one execution condition; the execution condition includes at least one of:
a first-type execution condition, used to access the first candidate PSCell; or
a second-type execution condition, used to perform an evaluation of a CPAC after the first candidate PSCell becomes a serving cell.

In some embodiments, regarding the optional implementation of step S5101, reference may be made to the optional implementations of step S2101 in FIG. 2a, step S2201 in FIG. 2b and step S2301 in FIG. 2c and other related parts of the embodiments involved in FIG. 2a, FIG. 2b and FIG. 2c, which will not be repeated in detail here.

In some embodiments, the above method may include the method described on the side of the above communication system, the terminal, the access network device, the core network device, etc., which will not be repeated here.

In order to better understand the technical solution of the present disclosure, some embodiments are further described below.

### Example 1

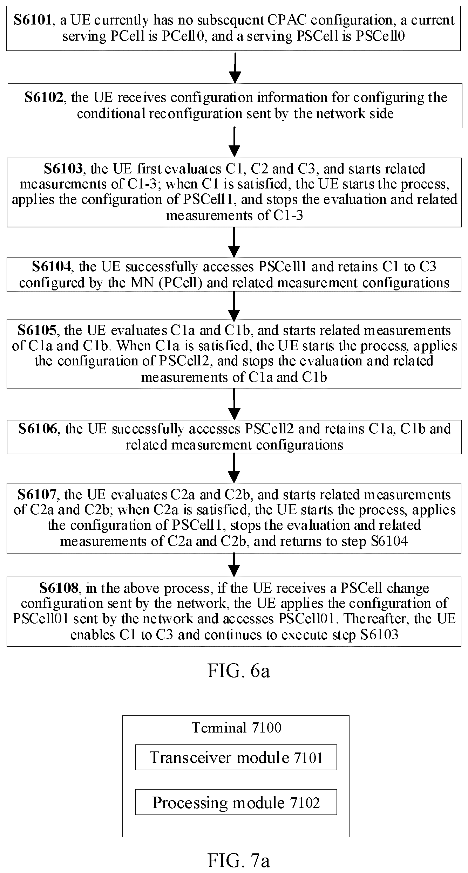

With reference to FIG. 6a, this example provides an information indication method, including the following steps.

Step S6101, a UE currently has no subsequent CPAC configuration, a current serving PCell is PCell0, and a serving PSCell is PSCell0.

Step S6102, the UE receives configuration information for configuring the conditional reconfiguration sent by the network side, and the UE determines that candidate PSCell1, candidate PSCell2, and candidate PSCell3 are currently configured. With reference to Table 1, initial execution conditions configured by the PCell (MN) include C1, C2, and C3, corresponding to PSCell1, PSCell2, and PSCell3, respectively.

**Table 1**

| Configuration identifier | Initial execution condition (first-type execution condition) | Candidate cell (first candidate PSCell) | Execution condition for the subsequent CPAC (second-type execution condition) |
|---|---|---|---|
| ID1 | C1 | PSCell1 | ID2/PSCell2, C1a |
| | | | ID3/PSCell 3, C1b |
| ID2 | C2 | PSCell2 | ID1/PSCell1, C2a |
| | | | ID3/PSCell 3, C2b |
| ID3 | C3 | PSCell3 | ID1/PSCell1, C3a |
| | | | ID2/PSCell 2, C3b |

Step S6103, the UE first evaluates C1, C2 and C3, and starts related measurements of C1-3. When C1 is satisfied, the UE starts the process, applies the configuration of PSCell1, and stops the evaluation and related measurements of C1-3.

Step S6104, the UE successfully accesses PSCell1 and retains C1 to C3 configured by the MN (PCell) and related measurement configurations.

Step S6105, the UE evaluates C1a and C1b, and starts related measurements of C1a and C1b. When C1a is satisfied, the UE starts the process, applies the configuration of PSCell2, and stops the evaluation and related measurements of C1a and C1b.

Step S6106, the UE successfully accesses PSCell2 and retains C1a, C1b and related measurement configurations.

Step S6107, the UE evaluates C2a and C2b, and starts related measurements of C2a and C2b. When C2a is satisfied, the UE starts the process, applies the configuration of PSCell1, stops the evaluation and related measurements of C2a and C2b, and returns to step S6104.

Step S6108, in the above process, if the UE receives a PSCell change configuration sent by the network, the UE applies the configuration of PSCell01 sent by the network and accesses PSCell01. Thereafter, the UE enables C1 to C3 and continues to execute step S6103.

It should be noted that S6101 to S6108 described in the present disclosure are an example implementation. In the process of applying this method, some steps may not be executed, or the execution order of some steps may be changed, or some additional steps may be added. The technical solutions obtained by increasing or decreasing the corresponding steps or changing the order are all within the scope of application of this method.

### Example 2

In some embodiments, the UE receives configuration information (first information) for configuring the conditional reconfiguration sent by the network side, in which the configuration information for configuring the conditional reconfiguration is used to configure one or more subsequent CPAC configurations corresponding to one or more candidate PSCells.

In some embodiments, a subsequent CPAC configuration corresponds to a candidate PSCell.

In some embodiments, the configuration of each candidate PSCell corresponds to a set of execution conditions (i.e., an execution condition set), and this set of execution conditions is used for an evaluation of the subsequent CPAC after this candidate PSCell (first candidate PSCell) becomes a serving cell.

In some embodiments, each execution condition in the set of execution conditions is associated with a candidate PSCell other than the first candidate PSCell.

In some embodiments, after the first PSCell becomes the serving cell, the UE evaluates the execution conditions in a first execution condition set. When one execution condition is met, the UE executes the subsequent CPAC and accesses the candidate PSCell corresponding to the execution condition.

In some embodiments, the UE receives the configuration information for configuring a mobility operation (e.g., conditional reconfiguration) sent by the network side, and the mobility operation supports the subsequent CPAC (i.e., after executing the CPAC, the corresponding configuration information is retained and can be used for the subsequent CPAC). The UE determines a mobility configuration configured for the UE to support the subsequent CPAC based on the configuration information for configuring the mobility operation sent by the network side.

For example, the UE may be configured with multiple mobility configurations supporting the subsequent CPAC at the same time, and each mobility configuration supporting the subsequent CPAC corresponds to one first candidate PSCell.

In some embodiments, the mobility configuration supporting the subsequent CPAC includes one or more of the following:
a configuration identifier (each first candidate PSCell corresponds to a configuration identifier);
an execution condition; or
a configuration of a candidate PSCell.

In some embodiments, the execution condition includes one or more of the following:
an initial execution condition (corresponding to the first-type condition); or
one or more execution conditions (execution condition set) for the subsequent CPAC (corresponding to the second-type conditions).

In some embodiments, the execution condition for the subsequent CPAC is associated with a second candidate PSCell, or is associated with a configuration identifier.

In some embodiments, the second candidate PSCell is a candidate PSC other than the first candidate PSCell that is configured by the network to support the subsequent CPAC.

In some embodiments, the configuration identifier is a configuration identifier other than a configuration identifier corresponding to the first candidate PSCell.

In some embodiments, the execution condition does not include the second-type execution condition, and the method further includes: sending second information; in which the second information indicates second configuration information corresponding to at least one first candidate PSCell, and the second configuration information indicates at least one second-type execution condition corresponding to each first candidate PSCell.

In some embodiments, the execution condition for the subsequent CAPC may be associated with a measurement configuration of an MN or a measurement configuration of an SN.

In some embodiments, the execution condition for the subsequent CAPC may be represented by one or more measurement identifiers, and the measurement identifier may correspond to the measurement configuration of the MN or the measurement configuration of the SN.

In some embodiments, the mobility configuration supporting the subsequent CPAC may be shown as follows.

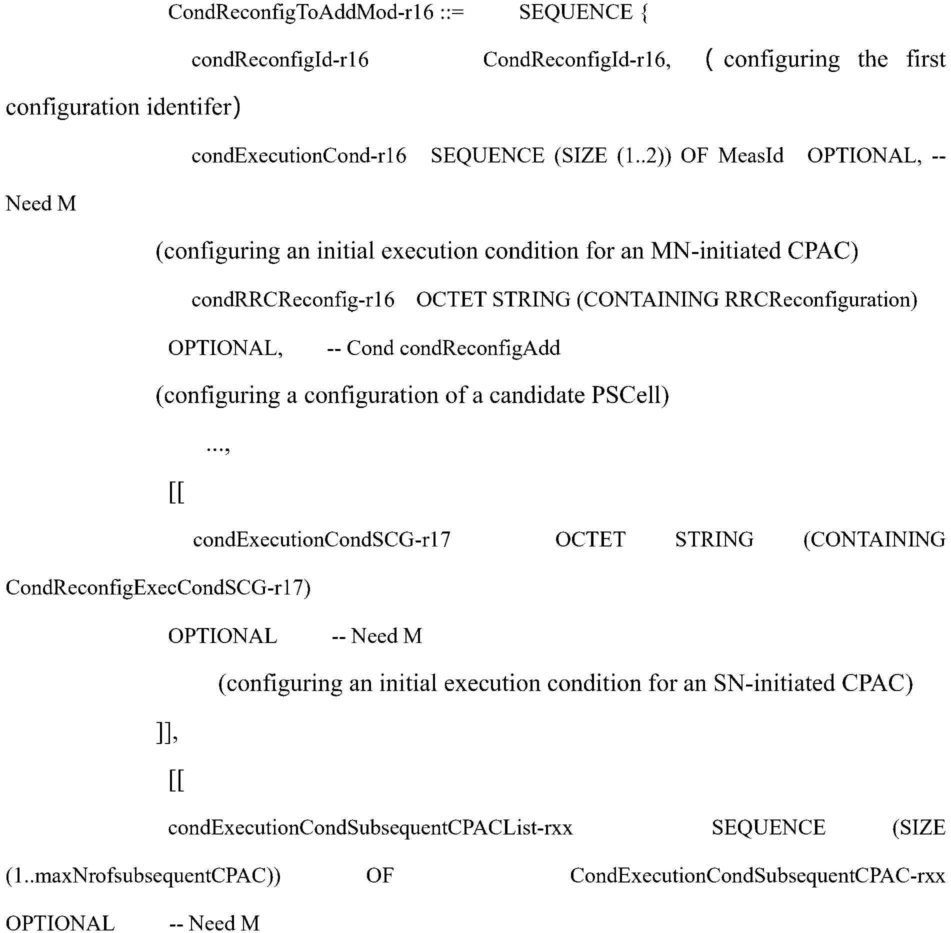

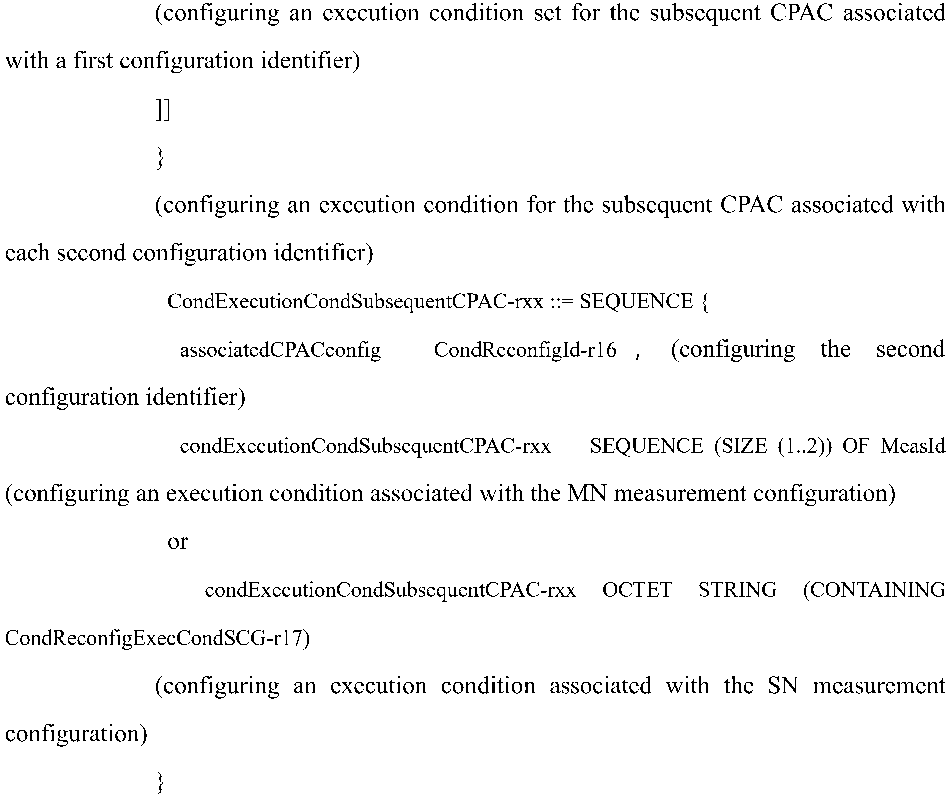

In some embodiments, the configuration information for configuring the conditional reconfiguration may be shown as follows.

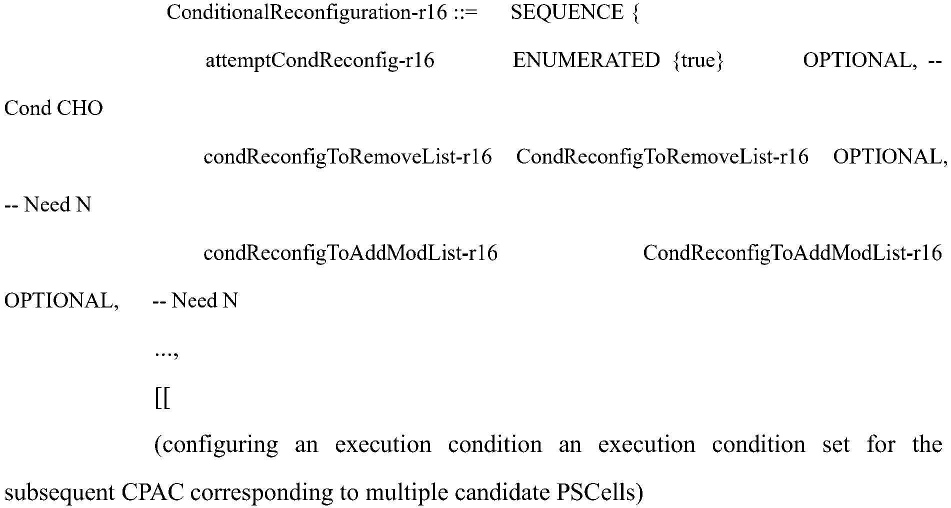

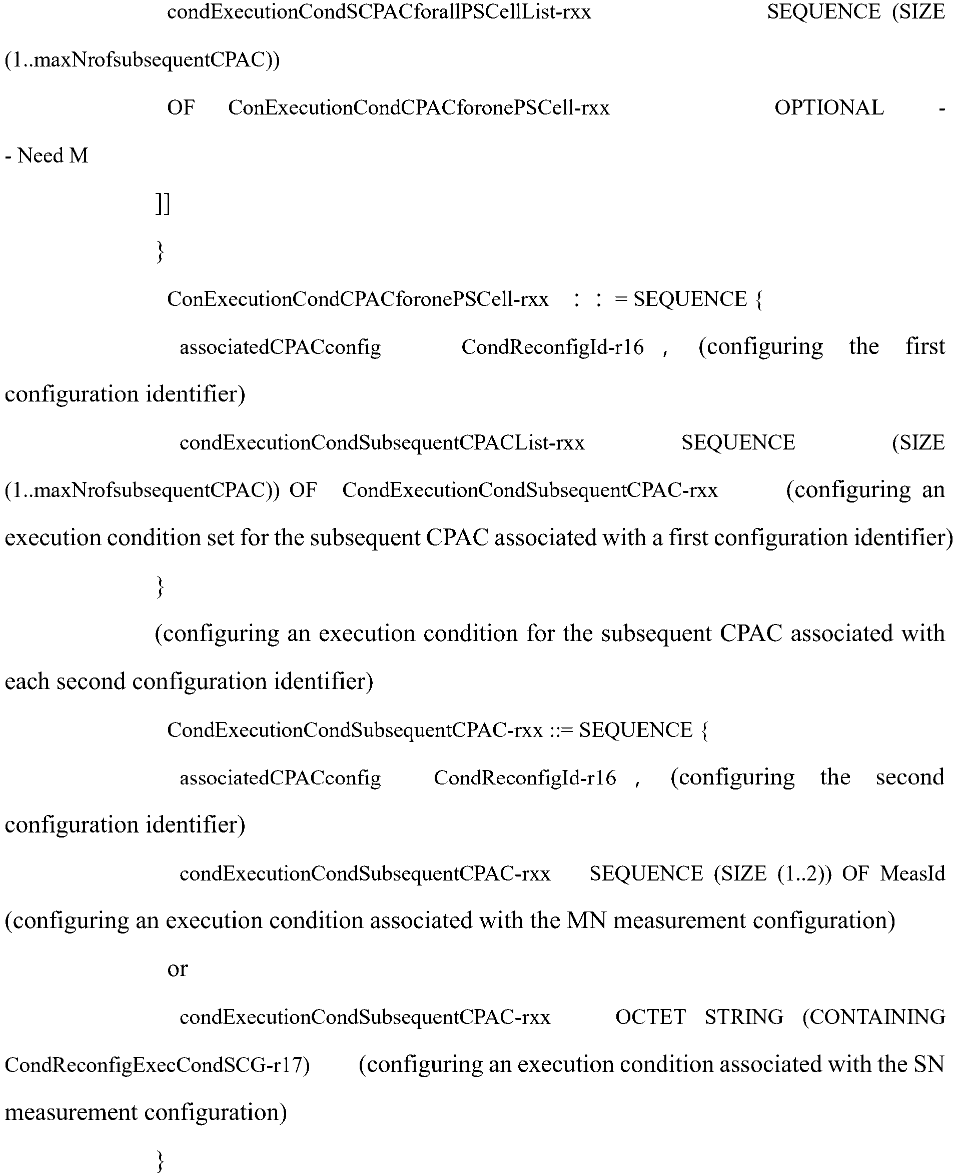

### Example 3

In some embodiments, the UE receives configuration information for configuring the conditional reconfiguration sent by the network side, and the configuration information for configuring the conditional reconfiguration is used to configure the subsequent CPAC configuration(s) corresponding to one or more candidate PSCells (in which a subsequent CPAC configuration corresponds to one candidate PSCell).

In some embodiments, after the UE receives the initial subsequent CPAC configuration, the UE evaluates the initial execution condition configured by the MN or S-SN.

In some embodiments, when the initial execution condition corresponding to any first candidate PSCell is met, the UE accesses the first candidate PSCell and applies the corresponding candidate configuration.

In some embodiments, if the initial execution condition corresponding to the subsequent CPAC configuration is an execution condition generated by the MN and/or an execution condition corresponding to a measurement configuration of the MN, the initial execution condition is retained or deleted.

In some embodiments, the retained execution condition can be enabled if and only if the current serving cell is not a candidate cell for the subsequent CPAC (or the UE is in a non-DC mode) and the network side has not configured a new initial execution condition for the subsequent CPAC.

In some embodiments, if the initial execution condition corresponding to the subsequent CPAC configuration is an execution condition generated by the SN and/or an execution condition corresponding to a measurement configuration of the SN, the initial execution condition is deleted.

In some embodiments, the UE receives the configuration information for configuring a mobility operation (conditional reconfiguration) sent by the network side, and the mobility operation supports the subsequent CPAC (that is, after executing the CPAC, the corresponding configuration information is retained and can be used for the subsequent CPAC).

In some embodiments, the UE determines the mobility configuration supporting the subsequent CPAC configured for the UE based on the configuration information for configuring the mobility operation sent by the network side.

For example, the UE may be configured with multiple mobility configurations supporting the subsequent CPAC at the same time, and each mobility configuration supporting the subsequent CPAC corresponds to one first candidate PSCell.

In some embodiments, the mobility configuration supporting the subsequent CPAC includes one or more of the following:
a configuration identifier (each first candidate PSCell corresponds to one configuration identifier);
an execution condition; or
a configuration of a candidate PSCell.

In some embodiments, the execution condition includes at least an initial execution condition.

In some embodiments, the UE evaluates whether a measurement result of the first candidate PSCell meets the initial execution condition based on the configuration of the network side. When the UE meets the initial execution condition of the first PSCell, the UE triggers the initial CPAC and accesses the first candidate PSCell.

In some embodiments, after the UE successfully accesses the first candidate PSCell, the UE continues to evaluate the conditions in the execution condition set for the subsequent CPAC corresponding to the first candidate PSCell.

In some embodiments, after the UE successfully accesses the first candidate PSCell, all or part of the initial execution conditions configured by the network are retained or deleted.

In some embodiments, if the initial execution condition corresponding to the subsequent CPAC configuration is an execution condition generated by the MN and/or an execution condition corresponding to the measurement configuration of the MN, the initial execution condition is retained or deleted.

In some embodiments, if the initial execution condition corresponding to the subsequent CPAC configuration is an execution condition generated by the SN and/or an execution condition corresponding to a measurement configuration of the SN, the initial execution condition is deleted.

In some embodiments, the retained initial execution condition associated with the MN may be used in one or more of the following scenarios.

In some embodiments, the UE performs SCG and/or DC Release (retaining the subsequent CPAC configuration).

In some embodiments, the UE performs a legacy PSCell change and the current serving PSCell is not one of the candidate PSCells for the subsequent CPAC.

In one embodiment, the network side may update and configure the initial execution condition which may be enabled by the UE when the serving PSCell is not configured or the serving PSCell is not any candidate PSCell. Based on the updated initial execution condition, the UE evaluates whether the candidate PSCell supporting the subsequent CPAC meets the condition, and executes the initial CPAC to access the candidate PSCell if the condition is met.

For example, if the UE does not have the initial execution condition, and the UE executes a PSCell change not for the subsequent CPC, if it is required to continue to enable the subsequent CPC, the serving SN or MN needs to provide the UE with the initial execution condition for the subsequent CPC.

In some embodiments, in response to the UE deleting the initial execution condition, the UE deletes the measurement configuration associated with the initial execution condition.

### Example 4

In some embodiments, the UE receives configuration information for configuring the conditional reconfiguration sent by the network side, and the configuration information for configuring the conditional reconfiguration is used to configure the subsequent CPAC configuration(s) corresponding to one or more candidate PSCells (in which a subsequent CPAC configuration corresponds to one candidate PSCell).

In some embodiments, if the current serving PSCell is not any candidate PSCell, the UE only evaluates the initial execution condition and starts the measurement corresponding to the initial execution condition.

In some embodiments, if the current serving PSCell is any candidate PSCell (first candidate PSCell), the UE only evaluates the execution conditions in the execution condition set for the subsequent CPAC corresponding to the first candidate PSCell, and starts measurements corresponding to the execution conditions in the execution condition set for the subsequent CPAC corresponding to the first candidate PSCell.

In some embodiments, after any initial execution condition or execution condition for the subsequent CPAC is met, the UE applies the corresponding configuration of the candidate cell, and the UE stops the evaluation and related measurements of all execution conditions. When the UE successfully accesses the candidate cell, the UE starts the evaluation and corresponding measurements of the execution conditions in the execution condition set for the subsequent CPAC corresponding to this candidate cell.

In the embodiments of the present disclosure, part or all of the steps and their optional implementations may be arbitrarily combined with part or all of the steps in other embodiments, or may be arbitrarily combined with optional implementations of other embodiments.

The embodiments of the present disclosure also propose an apparatus for implementing any of the above methods, for example, an apparatus is proposed, the above apparatus includes units or modules for implementing various steps performed by the terminal in any of the above methods. For another example, another apparatus is proposed, including units or modules for implementing various steps performed by the network device (such as an access network device, a core network function node, a core network device, etc.) in any of the above methods.

It should be understood that the division of the units in the above apparatus is only a division of logical functions, and in an actual implementation, they may be fully or partially integrated into one physical entity, or they may be physically separated. In addition, the units in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units of the above apparatus. The processor is, for example, a general-purpose processor, such as a central processing unit (CPU) or a microprocessor, and the memory is a memory inside the device or a memory outside the device. Alternatively, the units in the apparatus can be implemented in the form of hardware circuits, and the functions of some or all of the units can be realized by designing the hardware circuits. The above hardware circuits can be understood as one or more processors. For example, in one implementation, the above hardware circuit is an application-specific integrated circuit (ASIC), and the functions of some or all of the above units are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units. All units or modules of the above apparatuses can be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 7a is a schematic diagram of a terminal proposed in an embodiment of the present disclosure. As shown in FIG. 7a, the terminal 7100 includes at least one of a transceiver module 7101 or a processing module 7102. In some embodiments, the transceiver module is configured to receive first information. Optionally, the above transceiver module is used to execute at least one of communication steps related to "receiving and/or sending" performed by the terminal 101 in any of the above methods, which will not be repeated here. Optionally, the above processing module is used to execute at least one of other steps performed by the terminal 101 in any of the above methods, which will not be repeated here.

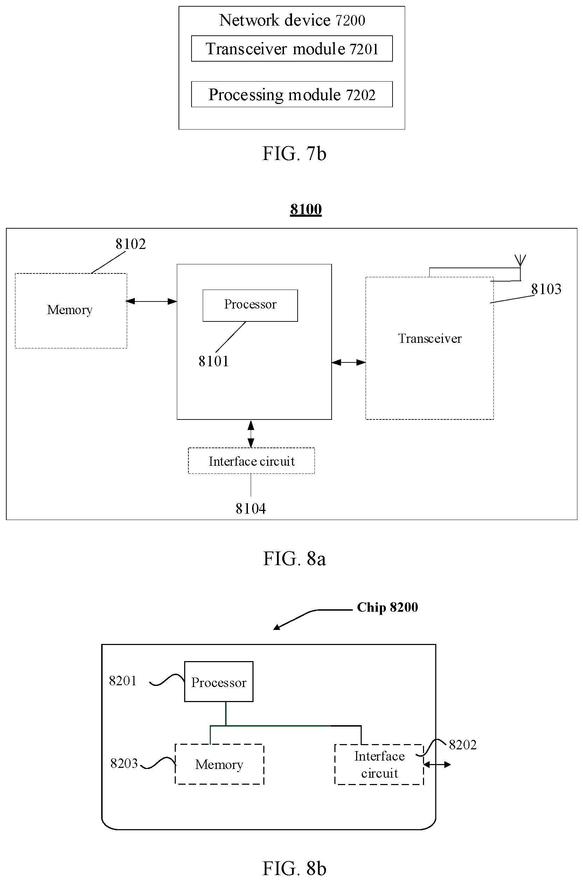

FIG. 7b is a schematic diagram of a network device proposed in an embodiment of the present disclosure. As shown in FIG. 7b, the network device 7200 includes at least one of a transceiver module 7201 or a processing module 7202. In some embodiments, the above transceiver module is configured to send first information. Optionally, the above transceiver module is used to execute at least one of communication steps related to "receiving and/or sending" performed by the terminal 101 in any of the above methods, which will not be repeated here. In some embodiments, the transceiver module may include a sending module and/or a receiving module, and the sending module and the receiving module may be separate or integrated together. Optionally, the transceiver module may be interchangeable with the transceiver.

In some embodiments, the processing module may be one module or include multiple submodules. Optionally, the multiple submodules respectively execute all or part of the steps required to be executed by the processing module. Optionally, the processing module may be replaced with the processor.

FIG. 8a is a schematic diagram of a communication device 8100 proposed in an embodiment of the present disclosure. The communication device 8100 may be a network device (e.g., the access network device, the core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 8100 may be used to implement the method described in the above method embodiments, and for details, reference may be made to the description in the above method embodiments.

As shown in FIG. 8a, the communication device 8100 includes one or more processors 8101. The processor 8101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. The communication device 8100 executes any of the above methods.

In some embodiments, the communication device 8100 further includes one or more memories 8102 for storing instructions. Optionally, all or part of the memory 8102 may be outside the communication device 8100.

In some embodiments, the communication device 8100 further includes one or more transceivers 8103. When the communication device 8100 includes one or more transceivers 8103, at least one of the communication steps (for example, step S2101, step S2102, which is not limited here) such as sending and/or receiving in the above methods is performed by the transceiver 8103, and at least one of the other steps (for example, step S2103, which is not limited here) is performed by the processor 8101.

In some embodiments, the transceiver may include a receiver and a transmitter, and the receiver and/or the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

In some embodiments, the communication device 8100 further includes one or more interface circuits 8104, which are connected to the memory 8102. Optionally, the interface circuit 8104 may be used to receive signals from the memory 8102 or other apparatuses, and may be used to send signals to the memory 8102 or other apparatuses. For example, the interface circuit 8104 may read instructions stored in the memory 8102 and send the instructions to the processor 8101.

The communication device 8100 described in the above embodiments may be the network device, or the UE, but the scope of the communication device 8100 described in the present disclosure is not limited thereto, and the structure of the communication device 8100 may not be limited by FIG. 8a. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 8b is a schematic diagram of a chip 8200 proposed in an embodiment of the present disclosure. In case where the communication device 8100 may be a chip or a chip system, reference may be made to the schematic diagram of the chip 8200 shown in FIG. 8b, but the present disclosure is not limited thereto.

The chip 8200 includes one or more processors 8201, and the chip 8200 is used to execute any of the above methods.

In some embodiments, the chip 8200 further includes one or more interface circuits 8202, which are connected to the memory 8203. Optionally, the interface circuit 8202 may be used to receive signals from the memory 8203 or other apparatuses, and the interface circuit 8202 may be used to send signals to the memory 8203 or other apparatuses. For example, the interface circuit 8202 may read instructions stored in the memory 8203 and send the instructions to the processor 8201.

In some embodiments, the interface circuit 8202 executes at least one of the communication steps (for example step S2101, step S2102, which is not limited here) such as sending and/or receiving in the above methods, and the processor 8201 executes at least one of the other steps (for example step S2103, which is not limited here).

In some embodiments, the terms such as "interface circuit", "interface", "transceiver pin", and "transceiver" may be exchangeable with each other.

In some embodiments, the chip 8200 further includes one or more memories 8203 for storing instructions. Optionally, all or part of the memory 8203 may be outside the chip 8200.

The present disclosure also proposes a storage medium, on which instructions are stored, and when the instructions are executed on the communication device 8100, the communication device 8100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication device 8100, enables the communication device 8100 to execute any of the above methods. Optionally, the program product is a computer program product.

The present disclosure also proposes a computer program, which, when executed on a computer, causes the computer to execute any one of the above methods.

## Claims

1. An information indication method, performed by a terminal, comprising:
receiving first information;
wherein the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition comprises at least one of:
a first-type execution condition, used to access a first candidate PSCell; or
a second-type execution condition, used to perform an evaluation of a conditional PSCell addition or change (CPAC) after a first candidate PSCell becomes a serving cell.

2. The method of claim 1, wherein each piece of first configuration information corresponds to one first set, and the first set comprises at least one second-type execution condition.

3. The method of claim 1, wherein the at least one execution condition comprises the second-type execution condition and the second-type execution condition is associated with a second candidate PSCell, and the method further comprises:
determining that the first candidate PSCell becomes the serving cell, and determining whether at least one second-type execution condition is satisfied; and
in a case of determining that the at least one second-type execution condition is satisfied, accessing a second candidate PSCell corresponding to the at least one second-type execution condition.

4. The method of claim 1, wherein the first information indicates at least one of:
a configuration identifier corresponding to a candidate PSCell;
the at least one execution condition; or
a configuration parameter corresponding to a candidate PSCell.

5. The method of claim 4, wherein the second-type execution condition is associated with a second candidate PSCell or a second configuration identifier; wherein the second candidate PSCell is a candidate PSCell, other than the first candidate PSCell, that is configured by a network to support the CPAC, and the second configuration identifier is a configuration identifier other than a first configuration identifier corresponding to the first candidate PSCell.

6. The method of claim 1, wherein the at least one execution condition does not comprise the second-type execution condition, and the method further comprises:
receiving second information;
wherein the second information indicates second configuration information corresponding to the at least one first candidate PSCell, and the second configuration information indicates at least one second-type execution condition corresponding to each first candidate PSCell.

7. The method of claim 6, wherein each piece of second configuration information corresponds to one second set, and the second set comprises the at least one second-type execution condition.

8. The method of claim 1, wherein the second-type execution condition is associated with a measurement configuration parameter of a master cell group (MCG) or a measurement configuration parameter of a secondary cell group (SCG).

9. The method of claim 8, wherein the second-type execution condition is associated with the measurement configuration parameter of the SCG, and the measurement configuration parameter of the SCG comprises a measurement configuration parameter corresponding to the first candidate PSCell.

10. The method of claim 7, wherein the second-type execution condition is associated with a first measurement identifier, and the first measurement identifier indicates that the second-type execution condition is associated with a measurement configuration parameter of an MCG or a measurement configuration parameter of an SCG.

11. The method of claim 1, wherein the at least one execution condition comprises the first-type execution condition, and the method further comprises:
determining whether the first-type execution condition is satisfied; and
in a case of determining that the first-type execution condition is satisfied, accessing the first candidate PSCell.

12. The method of claim 11, further comprising:
determining to access the first candidate PSCell, and retaining or deleting the first-type execution condition.

13. The method of claim 12, wherein retaining or deleting the first-type execution condition comprises one of:
determining that the first-type execution condition is an execution condition generated by a master node (MN) and/or an execution condition corresponding to a measurement configuration parameter of the MN, and retaining the first-type execution condition; or
determining that the first-type execution condition is an execution condition generated by a source secondary node (SN) and/or an execution condition corresponding to a measurement configuration parameter of the source SN, and deleting the first-type execution condition.

14. The method of claim 12, wherein for the first-type execution condition retained, in a case where a serving PSCell is not a candidate cell for the CPAC and no new initial execution condition is configured for the CPAC, the first-type execution condition is reenabled.

15. The method of claim 14, further comprising at least one of:
applying the first-type execution condition retained, after performing an SCG release;
applying the first-type execution condition retained, after performing a dual connection (DC) release; or
applying the first-type execution condition retained, after determining that a preset PSCell change is performed and a current serving PSCell is not the first candidate PSCell.

16. The method of any of claims 13-15, further comprising:
updating the first-type execution condition or reconfiguring the first-type execution condition;
wherein the first-type execution condition is used to be enabled by the terminal in a case where a serving PSCell is not configured or a serving PSCell is not the first candidate PSCell.

17. The method of claim 16, wherein reconfiguring the first-type execution condition comprises:
determining that the terminal has performed a conditional PSCell change (CPC), an accessed PSCell is not any candidate PSCell and the CPC needs to continue to be enabled, and reconfiguring the first-type execution condition.

18. The method of claim 12, further comprising:
determining to delete the first-type execution condition, and deleting a measurement configuration parameter associated with the first-type execution condition.

19. The method of claim 1, further comprising at least one of:
determining that a serving PSCell of the terminal is not the first candidate PSCell, starting a measurement corresponding to the first-type execution condition corresponding to the first candidate PSCell, and determining whether the first-type execution condition is satisfied; or
determining that a serving PSCell of the terminal is the first candidate PSCell, starting a measurement corresponding to the second-type execution condition corresponding to the first candidate PSCell, and determining whether the second-type execution condition is satisfied.

20. The method of claim 19, further comprising:
determining whether the first-type execution condition or the second-type execution condition is satisfied, and stopping an operation of determining whether the first-type execution condition or the second-type execution condition is satisfied and a candidate cell measurement operation.

21. The method of claim 20, further comprising:
determining that the terminal successfully accesses a candidate PSCell, and starting an operation of determining whether a second-type execution condition corresponding to the candidate PSCell is satisfied and a candidate cell measurement operation.

22. An information indication method, performed by a network device, comprising:
sending first information;
wherein the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition comprises at least one of:
a first-type execution condition, used to access a first candidate PSCell; or
a second-type execution condition, used to perform an evaluation of a conditional PSCell addition or change (CPAC) after a first candidate PSCell becomes a serving cell.

23. The method of claim 22, wherein each piece of first configuration information corresponds to one first set, and the first set comprises at least one second-type execution condition.

24. The method of claim 22, wherein the first information indicates at least one of:
a configuration identifier corresponding to a candidate PSCell;
the at least one execution condition; or
a configuration parameter corresponding to a candidate PSCell.

25. The method of claim 24, wherein the second-type execution condition is associated with a second candidate PSCell or a second configuration identifier; wherein the second candidate PSCell is a candidate PSCell, other than the first candidate PSCell, that is configured by a network to support the CPAC, and the second configuration identifier is a configuration identifier other than a first configuration identifier corresponding to the first candidate PSCell.

26. The method of claim 22, wherein the at least one execution condition does not comprise the second-type execution condition, and the method further comprises:
sending second information;
wherein the second information indicates second configuration information corresponding to the at least one first candidate PSCell, and the second configuration information indicates at least one second-type execution condition corresponding to each first candidate PSCell.

27. The method of claim 26, wherein each piece of second configuration information corresponds to one second set, and the second set comprises the at least one second-type execution condition.

28. The method of claim 22, wherein the second-type execution condition is associated with a measurement configuration parameter of a master cell group (MCG) or a measurement configuration parameter of a secondary cell group (SCG).

29. The method of claim 28, wherein the second-type execution condition is associated with the measurement configuration parameter of the SCG, and the measurement configuration parameter of the SCG comprises a measurement configuration parameter corresponding to the first candidate PSCell.

30. The method of claim 28, wherein the second-type execution condition is associated with a first measurement identifier, and the first measurement identifier indicates that the second-type execution condition is associated with the measurement configuration parameter of the MCG or the measurement configuration parameter of the SCG.

31. An information indication method, performed by a communication system, comprising:
sending, by a network device, first information to a terminal;
wherein the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition comprises at least one of:
a first-type execution condition, used to access a first candidate PSCell; or
a second-type execution condition, used to perform an evaluation of a conditional PSCell addition or change (CPAC) after a first candidate PSCell becomes a serving cell.

32. A terminal, comprising:
a transceiver module, configured to:
receive first information;
wherein the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition comprises at least one of:
a first-type execution condition, used to access a first candidate PSCell; or
a second-type execution condition, used to perform an evaluation of a conditional PSCell addition or change (CPAC) after a first candidate PSCell becomes a serving cell.

33. A network device, comprising:
a transceiver module, configured to:
receive first information;
wherein the first information indicates first configuration information corresponding to at least one first candidate primary secondary cell (PSCell), each first candidate PSCell corresponds to one piece of first configuration information, each piece of first configuration information corresponds to at least one execution condition, and the at least one execution condition comprises at least one of:
a first-type execution condition, used to access a first candidate PSCell; or
a second-type execution condition, used to perform an evaluation of a conditional PSCell addition or change (CPAC) after a first candidate PSCell becomes a serving cell.

34. A communication system, comprising: a terminal and a network device; wherein the terminal is configured to perform the communication method of any one of claims 1 to 21, the network device is configured to perform the information indication method of any one of claims 22 to 30.

35. A terminal, comprising:
a memory comprising executable instructions; and
one or more processors;
wherein when the executable instructions are executed by the one or more processors, the terminal is caused to perform the information indication method of any one of claims 1 to 21.

36. A network device, comprising:
a memory comprising executable instructions; and
one or more processors;
wherein when the executable instructions are executed by the one or more processors, the network device is caused to perform the information indication method of any one of claims 22 to 30.

37. A storage medium having instructions stored thereon, wherein when the instructions are executed on a communication device, the communication device is caused to perform the information processing method of any one of claims 1 to 21, or any of claims 22 to 30.
